# EUROPÄISCHE PATENTANMELDUNG

(11) **EP 2 196 299 A1**
(43) Veröffentlichungstag der Anmeldung: **16.06.2010**
(21) Anmeldenummer: 08021351.5
(22) Anmeldetag: 09.12.2008
(51) Int. Cl.: B29C 47/10, B29B 13/02, B29C 47/92, B29C 45/17

(54) **Verfahren zur Aufbereitung von rezykliertem Polyethylenterephthalat**

(71) Anmelder: Alpla Werke Alwin Lehner GmbH & CO. KG, 6971 Hard (AT)
(72) Erfinder: Siegl, Robert, 6850 Dornbirn (AT)
(74) Vertreter: Bohest AG Branch Ostschweiz

(57) **Zusammenfassung**

Es ist ein Verfahren zur Aufbereitung von rezykliertem Polyethylenterephthalat beschrieben, bei dem rezykliertes Polyethylenterephthalat einem Extruder zugeführt und in einer Einzugszone des Extruders bei einer Temperatur von 190° bis 330° mit entfeuchtetem Stickstoff in Kontakt gebracht wird. Dabei wird zugleich der in der Einzugszone des Extruders vorhandene Sauerstoff verdrängt.

## Beschreibung

Die Erfindung betrifft ein Verfahren zur Aufbereitung von rezykliertem Polyethylenterephthalat (PET) für die Herstellung von Kunststoffverpackungen, insbesondere für die Herstellung von Kunststoffbehältern in einem Blasverfahren.

Eine grosse Zahl der heutzutage eingesetzten Verpackungen wird aus Kunststoff gefertigt. Wasser und Softdrinks werden meist in Kunststoffbehälter, insbesondere Kunststoffflaschen, abgefüllt, die aus einem extrudierten oder gespritzten Vorformling in einem Blasverfahren hergestellt werden. Ein dabei sehr häufig eingesetztes Material ist Polyethylenterephthalat (PET), das eine hohe Transparenz aufweist, relativ einfach zu verarbeiten ist und zu Kunststoffbehältern mit hoher Festigkeit führt. Die Vorteile von PET gegenüber anderen Kunststoffen liegen u.a. in den besseren Barriereeigenschaften gegenüber Gasen, insbesondere Kohlendioxid und Sauerstoff. Auch die recht einfache Rezyklierbarkeit von aus PET hergestellten Kunststoffbehältern ist ein weiteres Argument für den Einsatz dieses Materials. Wegen der vielen Vorteile von PET werden zunehmend auch andere Produkte in diesen Kunststoff verpackt.

PET wird meist durch Direktveresterung gewonnen, bei der Terephthalsäure mit Monoethylenglycol in Gegenwart eines Katalysators, meist Antimontrioxid oder vergleichbare Germanium- oder Titanverbindungen, direkt umgesetzt wird. Durch die Polykondensation, bei der Wasser abgespalten wird, entstehen lange Ketten, wobei sich das Reaktionsprodukt der Terephthalsäure und des Monoethylenglykols abwechseln. Da es sich bei der Polykondensation um eine Stufenreaktion handelt, führen erst hohe Umsätze zu ausreichend grossen Molekulargewichten. Um einen vorzeitigen Abbruch des Kettenwachstums, beispielsweise durch monofunktionale Monomere, zu verhindern, werden besonders hohe Anforderungen an die Reinheit der Edukte gestellt.

Die Qualität des PET, seine physikalischen Eigenschaften, wie Zähigkeit oder Widerstandskraft, sind abhängig von der Kettenlänge. Da die Kettenlänge selbst nur sehr schwer bestimmt werden kann, wurden spezielle Messverfahren entwickelt, um das erzeugte PET einschätzen und bewerten zu können. Eines der dazu eingesetzten Verfahren beruht auf einer Bestimmung der Viskosität des in einem Lösungsmittel aufgelösten PETs. Für die Charakterisierung des Materials wird daher nicht eine Kettenlänge sondern eine nach einem speziellen standardisierten Verfahren gemessene Viskosität (Intrinsic Viscosity bzw. IV) angegeben. Die Angaben erfolgen meist in Deziliter pro Gramm Material. In der Kunststoffflaschenfertigung gilt ein PET mit einem IV Wert von 0.84 - 0.89 dl/g als ein sehr zähes Material. PET mit einem IV von 0.64 - 0.74 dl/g gilt hingegen als ein sehr weiches Material. Angestrebt wird daher ein PET mit einer Viskosität, die zwischen den angeführten Werten liegt.

Nach der Trennung von anderen Kunststoffen über physikalische Eigenschaften, wie die nahe Infrarotabsorbtion oder die Dichte, wird das PET gewaschen und von anderen Flaschenreststoffen, wie beispielsweise Papier oder Kleber von den Etiketten befreit. Beim Waschen von PET wird das Polymer im Grunde nicht verändert. Das PET wird nur von Verunreinigungen gesäubert und in eine Form gebracht, die eine weitere Verarbeitung ermöglicht, beispielsweise als Flakes. Beliebt ist der Einsatz von Laugen welche die verschmutzte PET Oberfläche angreifen und diese durch Verseifung entfernen. Durch das Erhitzen der Flakes mit oder ohne Vakuum Unterstützung werden die Feuchtigkeit oder andere flüchtige Kontaminationen entfernt.

Die Verweilzeit, Erhitzung und das Vakuum, durch das die Flakes getrocknet werden, sind meist zu gering um eine erneute Polykondensation auf das Niveau des urspünglichen Rohmaterials zu bekommen; speziell die Oxidation von Verunreinigungen und die starke Vergilbung des Materials bei erhöhten Temperaturen oder längeren Verweilzeiten limitieren die meisten Prozesse. Das Verkleben der Flakes bei erhöhten Temperaturen ist ein weiteres Hindernis. Auch das Aufschmelzen der Flakes und das Vakuum in Entgasungsschnecken sind Möglichkeiten, um die Viskosität des Materials anzuheben und ein gut rieselfähiges Granulat zu erhalten. Auch bei diesen Prozessen stellen die Oxidation und die Vergilbung des Materials Probleme dar, die noch nicht gelöst sind. Zusätzlich ist auch der Viskositätsaufbau oft nicht zufriedenstellend.

Es sind auch Prozesse bekannt, bei denen die Granulieranlage mit einem Solid State Reaktor verbunden ist, in dem das Granulat erneut erhitzt und mit einem Vakuum beaufschlagt wird, um die Polykondensation und die gewünschte Viskosität einzustellen. Dabei wird oft Stickstoff eingesetzt, um die weitere Vergilbung des Materials zu unterbinden. Die durch die Extrusion und Trocknung eingetretene Oxidation und Vergilbung sind aber nicht mehr reversibel.

Beim Rezyklieren und bei jeder Weiterverarbeitung wird das PET erneut erhöhten Temperaturen ausgesetzt. Die erhöhten Temperaturen begünstigen zwar einen weiteren Polykondensationsprozess; leider fördern sie aber auch den oxidativen Abbau des Kunststoffes und der darin enthaltenen Kontaminationen. Die oxidative Belastung des PET und der Kontaminationen gehen einher mit einer Vergilbung und insbesondere mit einem Abbau der molekularen Struktur des Materials, der sich in einer unerwünschten Verringerung der Viskosität des Rezyklates äussert.

Aufgabe der vorliegenden Erfindung ist es daher, ein Verfahren zur Aufbereitung von rezykliertem Polyethylenterephthalat zu schaffen, welches diesen unerwünschten Degenerationsprozessen, insbesondere oxidativen Abbauprozessen und Vergilben, entgegenwirkt. Das Verfahren soll einfach in die bestehenden Verarbeitungsprozesse integrierbar sein. Dabei sollen die Wirtschaftlichkeit gewahrt bleiben und soll auch ökologischen Gesichtspunkten Rechnung getragen werden können.

Die Lösung dieser Aufgaben besteht in einem Verfahren zur Aufbereitung von rezykliertem Polyethylenterephthalat, wie es im Patentanspruch 1 definiert ist. Weiterbildungen des Verfahrens sowie bevorzugte und/oder vorteilhafte Verfahrensvarianten sind Gegenstand der abhängigen Ansprüche.

Das durch die Erfindung vorgeschlagene Verfahren zur Aufbereitung von rezykliertem Polyethylenterephthalat, besteht darin, dass rezykliertes Polyethylenterephthalat einem Extruder zugeführt und in einer Einzugszone des Extruders bei einer Temperatur von 190° bis 330° mit entfeuchtetem Stickstoff in Kontakt gebracht wird, wobei der in der Einzugszone des Extruders vorhandene Sauerstoff verdrängt wird.

Durch die Verdrängung des Sauerstoffs werden die oxidative Kettenspaltung bzw. der oxidative Abbau der Polymerketten des Polyethylenterephthalats (PET) verhindert. Gleichzeitig wird das Entstehen von oxidativen Abbauprodukten minimiert. Die Temperatur von 190° bis 330° begünstigt dabei gleichzeitig die Polykondensation und damit den Aufbau der PET Makromoleküle. Zusätzlich kommt es zu einem Gasaustausch, der neben dem Sauerstoff auch andere flüchtige Kontaminationen aus dem Kunststoffmaterial verdrängt. Dies führt zu einer deutlichen Reduktion von unerwünschten Kontaminationen, wie beispielsweise Benzolen, Furanen, Phenolen und anderen zyklischen Kohlenwasserstoffen, die im PET Material auftreten können. Nachdem der Aufbau des PET Materials begünstigt wird und zugleich Kontaminationsprodukte verhindert werden, kann eine separate Dekontamination des PET, wie sie sonst oft separat, nach der Extrusion in sogenannten Solid State Polykondensationsreaktoren durchgeführt wird, teilweise oder zur Gänze entfallen. Dadurch verbilligt sich die Weiterverarbeitung des rezyklierten PET.

Das rezyklierte PET wird bei der Weiterverarbeitung dem Extruder üblicherweise in Gestalt von Flakes oder als Granulat zugeführt. Flakes und Granulate sind fliessfähig und können entsprechend einfach transportiert und zudosiert werden.

Für die Verfahrensführung und zum Erzielen der gewünschten Ergebnisse erweist es sich als zweckmässig, wenn der Stickstoff am Auslass in die Einzugszone des Extruders eine relative Feuchte aufweist, die zwischen 10⁻⁶% und 0,01 % beträgt.

Der benötigte Stickstoff kann beispielsweise unmittelbar vor dem Einbringen in die Einzugszone des Extruders mittels eines Stickstoff-Generators erzeugt werden. StickstoffGeneratoren sind vielfach erprobt und liefern den Stickstoff in der gewünschten Konzentration und in der benötigten geringen Feuchte. Bei Bedarf können die Konzentration und die Feuchte auch sehr einfach verändert werden. Stickstoffgeneratoren erzeugen den benötigten Stickstoff einfach aus Pressluft, die in nahezu allen einschlägigen Industrieanlagen zur Verfügung steht.

In einer alternativen Verfahrensführung kann der Stickstoff auch aus einem Stickstoffspeicher bezogen werden. Gegebenenfalls wird der aus dem Stickstoffspeicher bezogene Stickstoff vor dem Einbringen in die Einzugszone des Extruders noch durch eine Entfeuchtungseinrichtung geleitet, um die erforderliche sehr geringe Feuchte einzustellen.

Das erfindungsgemässe Verfahren kann primär, direkt in einer Rezyklierungsanlage durchgeführt werden, beispielsweise im Zuge der Herstellung von Regranulaten aus dem rezyklierten Polyethylenterephthalat. Das Verfahren zur Aufbereitung des rezyklierten PET kann aber auch separat oder zusätzlich zum primären Verfahren ein weiteres mal bei der Herstellung eines Spritzgussrohlings für die Weiterverarbeitung in einer Blasvorrichtung durchgeführt werden. Dazu wird das rezyklierte PET direkt im Einzugsextruder des Spritzaggregates behandelt. Beim Einsatz von extrusionsblasfähigem PET kann das erfindungsgemässe Verfahren sogar an einem Extruder einer Extrusionsblasvorrichtung durchgeführt werden. Auch in diesem Fall kann die Behandlung des rezyklierten PET zusätzlich zur primären Behandlung in der Rezyklierungsanlage erfolgen.

Halbzeug oder Kunststoffverpackungen, die rezykliertes PET enthalten, das gemäss einer Variante des erfindungsgemässen Verfahrens behandelt und aufbereitet worden ist, unterscheiden sich in ihren Eigenschaften praktisch nicht von Gegenständen, die aus reinem Neu-PET hergestellt sind. Der Anteil des behandelten rezyklierten PET kann dabei bis zu 100 % betragen, was sich in wirtschaftlicher Hinsicht als besonders vorteilhaft erweist. Abgesehen vom ökonomischen Vorteil weist das erfindungsgemässe Verfahren auch ökologische Vorteile auf, indem oxidative Abbauprodukte und Kontaminationen weitgehend verhindert werden. Die verbesserten Eigenschaften des rezyklierten PET führen zu einer vielfältigeren Einsetzbarkeit und erhöhen damit insgesamt die Bereitschaft für die Verwendung von rezykliertem PET, wodurch Ressourcen geschont und Abfall vermieden werden können.

## Patentansprüche

1. Verfahren zur Aufbereitung von rezykliertem Polyethylenterephthalat, bei dem das Polyethylenterephthalat einem Extruder zugeführt und in einer Einzugszone des Extruders bei einer Temperatur von 190° bis 330° mit entfeuchtetem Stickstoff in Kontakt gebracht wird, wobei der in der Einzugszone des Extruders vorhandene Sauerstoff verdrängt wird und die Viskosität des Regenerats angehoben werden.

2. Verfahren nach Anspruch 1, **dadurch gekennzeichnet, dass** das Polyethylenterephthalat dem Extruder in Gestalt von Flakes oder als Granulat zugeführt wird.

3. Verfahren nach Anspruch 1 oder 2, **dadurch gekennzeichnet, dass** der Stickstoff am Auslass in die Einzugszone des Extruders eine relative Feuchte aufweist, die zwischen 10⁻⁶ % und 0,01% beträgt.

4. Verfahren nach einem der vorangehenden Ansprüche, **dadurch gekennzeichnet, dass** der Stickstoff unmittelbar vor dem Einbringen in die Einzugszone des Extruders mittels eines Stickstoff-Generators erzeugt wird.

5. Verfahren nach einem der Ansprüche 1 bis 3, **dadurch gekennzeichnet, dass** der Stickstoff aus einem Stickstoffspeicher bezogen wird.

6. Verfahren nach Anspruch 5, **dadurch gekennzeichnet, dass** der aus dem Stickstoffspeicher bezogene Stickstoff vor dem Einbringen in die Einzugszone des Extruders durch eine Entfeuchtungseinrichtung geleitet wird.

7. Verfahren nach einem der vorangehenden Ansprüche, **dadurch gekennzeichnet, dass** es in einer Rezyklierungsanlage, vorzugsweise im Zuge der Herstellung von Flakes oder Granulaten aus dem rezyklierten Polyethylenterephthalat, durchgeführt wird.

8. Verfahren nach einem der vorangehenden Ansprüche, **dadurch gekennzeichnet, dass** es vor der Herstellung eines Spritzgussrohlings im Einzugsextruder des Spritzaggregates durchgeführt wird.

9. Verfahren nach einem der Ansprüche 1 - 7, **dadurch gekennzeichnet, dass** es an einem Extruder einer Extrusionsblasvorrichtung durchgeführt wird.

10. Halbzeug oder Kunststoffverpackung enthaltend rezykliertes PET, das nach einem der vorangehenden Ansprüche aufbereitet worden ist.
